(19) Europäisches Patentamt

European Patent Office

Office européen des brevets

(11) **EP 1 041 372 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*G01J 3/02* (2006.01)   *G02B 7/00* (2006.01)

(21) Anmeldenummer: **99106111.0**

(22) Anmeldetag: **01.04.1999**

(54) **Spektrometer**

Spectrometer

Spectromètre

(84) Benannte Vertragsstaaten:
**CH DE FR GB IT LI**

(43) Veröffentlichungstag der Anmeldung:
**04.10.2000 Patentblatt 2000/40**

(73) Patentinhaber:
• **Gretag-Macbeth AG**
  **8105 Regensdorf (CH)**
• **Carl-Zeiss Jena GmbH**
  **07745 Jena (DE)**

(72) Erfinder:
• **Ehbets, Peter**
  **CH-8046 Zürich (CH)**

• **Orelli von, Adrian**
  **CH-8008 Zürich (CH)**
• **Vasold,Eckard**
  **07743 Jena (DE)**
• **Schebesta,Wilhelm**
  **07749 Jena (DE)**

(74) Vertreter: **Schwabe - Sandmair - Marx**
  **Stuntzstrasse 16**
  **81677 München (DE)**

(56) Entgegenhaltungen:
  **EP-A- 0 194 613        EP-A- 0 727 681**
  **US-A- 5 040 889**

EP 1 041 372 B1

**Beschreibung**

Die Erfindung betrifft ein Spektrometer gemäss dem Oberbegriff des unabhängigen Anspruchs.

Der Trend bei modernen Spektrometersystemen geht zu kompakten, kostenaünstigen Messköpfen mit schnellen Messzeiten und moderater spektraler Auflösung von 5 bis 20 nm. Typische Anwendungen für solche spektralen Sensoren liegen in der Farbmesstechnik oder der industriellen Prozesskontrolle.

Spektrometer nach dem bekannten Diodenzeilenprinzip haben das Potential, die obengenannten Anforderungen zu erfüllen und bilden die Grundlage für die vorliegende Erfindung. Die Voraussetzungen für ihre Anwendbarkeit werden im Folgenden diskutiert.

Die Diodenzeile ermöglicht eine parallele Bewertung des gesamten Messspektrums, was zu schnellen Messzeiten führt.

Die geforderten spektralen Auflösungswerte können mit kompakten Spektrometer-Geometrien mit Brennweiten unter 30 mm realisiert werden. Verschiedene Beispiele wurden mit klassischen Spektrometeranordnungen basierend auf planaren Gittern , z. B. der Demultiplexer in der Ebert-Fastie Geometrie in US-A 4 744 618, oder konkaven Gittern mit Aberrationskorrektur, z. B. EP-A 0 489 286, demonstriert.

Kostengünstige Herstellung verlangt den Einsatz moderner Fabrikations- und Montagetechnologien. Die Kosten solcher Spektrometer werden massgeblich durch drei Faktoren bestimmt: die Komponentenkosten für die Diodenzeile und das Beugungsgitter sowie der Aufwand für die Feinjustierung des optischen Systems.

Diodenzeilen werden von verschiedenen Herstellern standardgemäss in einem Keramik- oder Kunststoffgehäuse angeboten, z. B von Hamamatsu. Diese Detektorkonfektionierung wird in existierenden Diodenzeilenspektrometern eingesetzt (z. B. EP-A 0 489 286). Allerdings besitzt diese Detektorgeometrie mehrere grundlegende Nachteile.

Erstens ist ein Qualitätsgehäuse aus Keramik sehr teuer und macht einen grossen Anteil an den Gesamtkosten der Detektoreinheit aus. Zweitens ist die Position der lichtempfindlichen Detektorfläche gegenüber den Aussendimensionen eines Standard-Gehäuses vor allem in der vertikalen Richtung für die vorliegende Anwendung ungenügend spezifiziert. Aus diesem Grund kann das Gehäuse nicht als mechanische Referenz bei der Montage dienen. Die Diodenzeile im Gehäuse, d.h. der eigentliche Detektorchip oder das Beugungsgitter, muss bei der Montage am Spektrometerkörper aktiv positioniert werden, (EP-A 0 727 681, EP-A 0 489 286). Dieser Produktionsvorgang ist aufwendig und mit hohen Extrakosten verbunden.

Klassische Gitter werden in eine Epoxyschicht auf optischen Glassubstraten repliziert. Das Verfahren ist anspruchsvoll und eignet sich nicht für die kostengünstige Herstellung grosser Stückzahlen. Die Kosten für das Gitter können durch den Einsatz von Kunststoffgittern, die im Spritzgussverfahren hergestellt werden, drastisch gesenkt werden. Diese Technologie ist seit kurzem erhältlich. Das Spritzgussverfahren ermöglicht an der Gitterkomponente das direkte Anbringen von sehr präzisen mechanischen Positionierhilfen, die eine einfache Montage des Gitters am zentralen Spektralmodulkörper ohne aktive Justage ermöglichen.

Das Hauptproblem beim Einsatz von Kunststoffgittern liegt jedoch in der grossen Temperaturempfindlichkeit. Die Gitterlinien dehnen sich proportional zum thermischen Ausdehnungskoeffizienten des Kunststoffmaterials aus, was eine Verschiebung des Messspektrums gegenüber der Diodenzeile bewirkt und Fehler in die Wellenlängenkalibration des Spektrometers einführt. Da optische Spritzgusskunststoffe thermische Ausdehnungskoeffizienten in der Grössenordnung von $8\times10^{-5}$ /°K (zirka 10 mal grösser als Glas) besitzen, wird diese spektrale Verschiebung zur Hauptkomponente des Temperaturdrifts des gesamten Spektrometers. Eine Kompensation des Temperaturdrifts ist deshalb Voraussetzung für die Anwendbarkeit dieser Technologie.

Existierende Techniken für die Kompensation des Temperaturdrifts von Diodenzeilenspekttometern werden in den Dokumenten EP-A 0727 681 und US-A 4 709 989 vorgestellt. Die Techniken beziehen sich auf den Einsatz von Materialien mit geringen thermischen Ausdehnungskoeffizienten und einer genauen Anpassung der thermischen Ausdehnungskoeffizienten der verschiedenen Komponenten im Spektrometer. Das Dokument US-A 4 709 989 bezieht sich auf eine Anpassung des thermischen Ausdehnungskoeffizienten des Spektralmodulkörpers an die Materialien der abbildenden Optik durch den Einsatz von Keramikmaterial. Dokument EP-A 0 727 681 beinhaltet eine Anpassung des Ausdehnungskoeffizienten des Spektralmodulkörpers durch Keramik an die Diodenzeile aus Silizium. Beide Techniken versuchen eine möglichst gleichmässige thermische Ausdehnung des gesamten Spektrometers zu erreichen, so dass die Winkel des optischen Strahlengangs im Spektrometer erhalten bleiben und der thermische Drift minimiert wird. Allerdings schränken beide Techniken die Materialwahl für den Spektralmodulkörper ein und sind so nicht für kostengünstige spektrale Sensoren aus Kunststoff anwendbar.

Die US-A-5,040,889 beschreibt ein Spektrometer mit Fotodetektoren, die auf einer Basis montiert sind, wobei diese Basis wiederum gegenüber einer Montagebasis durch Schrauben verstellbar ist.

Die US-A-4,805,993 beschreibt ein Verfahren zur Montage einer optischen Komponente in einem maschinellen Rahmen, in welchem die justierte optische Komponente oder ihr Halter an den maschinellen Rahmen angeschlossen ist, und zwar nur über eine Justiervorrichtung. Die justierte optische Komponente wird permanent an dem Rahmen befestigt, und zwar mittels einer Substanz, die selbsthärtend ist, und zwar nachdem die Justiervorrichtung entfernt wurde. Für eine dauerhafte, starke Befestigung von justierten optischen Komponenten mittels einer selbsthärtenden Substanz wird die Befestigung über zumindest zwei willkürlich unabhängige Befestigungen verteilt und die Teile, die für die Befestigung verwendet werden, werden derart konfiguriert und dimensioniert, dass das verbleibende Volumen oder die verbleibende Schichtdicke der selbsthärtenden Substanz optimal ist.

Aufgabe der vorliegenden Erfindung ist es ein Spektrometer der gattungsgemässen Art dahingehend zu verbessern, dass es einerseits extrem einfach und kostengünstig, insbesondere unter Einsatz von Kunststoffkomponenten aufgebaut werden kann und anderseits auch bei Verwendung von Kunststoffkomponenten einen für die Praxis ausreichend kleinen Temperaturdrift aufweist.

Die obige Aufgabe wird durch die im kennzeichnenden Teil des unabhängigen Anspruchs beschriebenen Merkmale gelöst. Besonders vorteilhafte Ausgestaltungen und Weiterbildungen sind Gegenstand der abhängigen Ansprüche.

Die neue Detektorgeometrie des Spektrometers kommt vorteilhaft Gehäuse für die Detektoreinrichtung, speziell Diodenzeile aus und kann kostengünstig hergestellt werden. Ferner bietet die spezielle Detektorgeometrie eine einfache Montage am Tragkörper.

Unabhängig davon ermöglicht die vorteilhafte Montage der Detektoreinrichtung auf einer Grundplatte insbesondere in Verbindung mit der Abstimmung der Materialwahl für Tragkörper, Beugungsgitter und Grundplatte hinsichtlich ihrer thermischen Ausdehnungskoeffizienten eine vollständige Kompensation des Temperaturdrifts auch für Spektrometersysteme mit Kunststoffkomponenten. Die Vorteilhafte. Kompensation basiert auf einer optimalen geometrischen Auslegung und Verbindung des Tragkörpers und der Detektoreinrichtung. Diese neue Technik ermög- ' licht eine freiere Materialwahl und erlaubt so die Berücksichtigung zusätzlicher produktionstechnischer Parameter wie Herstellungskosten.

Im folgenden wird die Erfindung anhand der Zeichnung näher erläutert. Es zeigen:

Fig.1    einen Schnitt durch ein bevorzugtes Ausführnmgsbeispiel eines erfindungsgemässen Spektrometers,

Fig. 2    eine mit einer Diodenzeile versehene Grundplatte des Spektrometers der Fig.1,

Fig. 3    eine Ansicht des Tragkörpers des Spektrometers bei abgenommener bzw. nicht montierter Grundplatte und

Fig. 4    eine Skizze zur Erläuterung der Ermittlung des Temperaturdriftverhaltens.

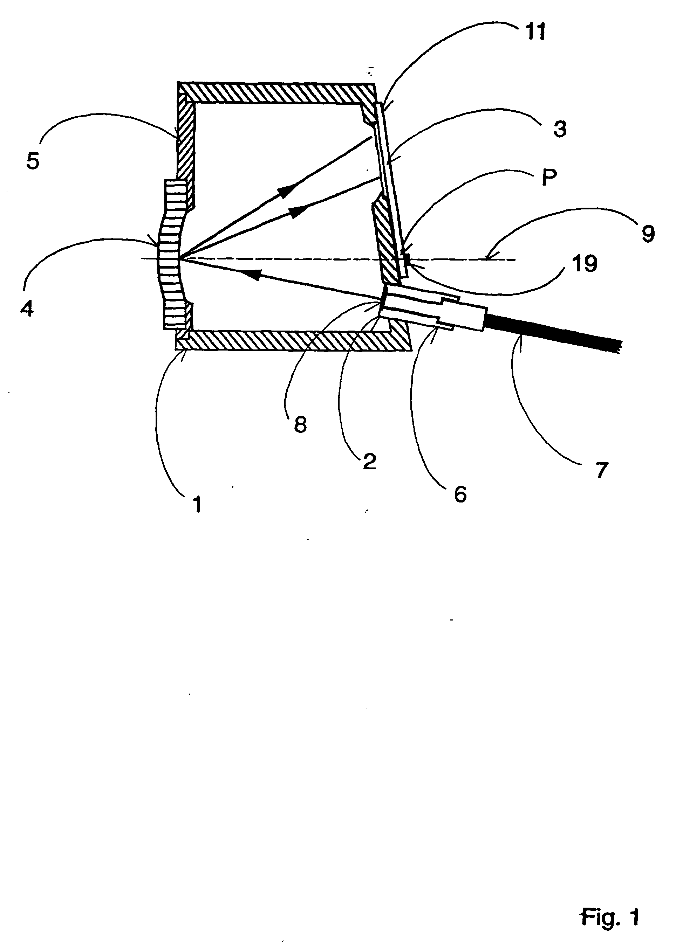

Der generelle Aufbau des erfindungsgemässen Diodenzeilen-Spektrometers besteht gemäss Fig. 1 aus mehreren Grundkomponenten: Ein Tragkörper 1 mit Montagemöglichkeiten für einen Lichteinlass 2 (optische Faser und/oder mechanischer Eintrittspalt), eine Detektoreinrichtung in Form einer Diodenzeile 3, Optikkomponenten für die Abbildung des Lichteinlasses auf die Diodenzeile 3 sowie ein Beugungsgitter 4 für die Aufspaltung des über den Lichteinlass zugeführten Messlichts in seine spektralen Komponenten.

Figur 1 zeigt eine bevorzugte Ausführungsform (Geometrie) basierend auf einem konkaven Reflexionsbeugungsgitter mit Korrektur der Abbildungsfehler. In dieser Anordnung übernimmt das konkave Reflexionsbeugungsgitter 4 sowohl die Funktion für die optische Abbildung des Lichteinlasses als auch diejenige für die spektrale Aufspaltung des Messlichts.

Soweit entspricht das erfindungsgemässe Spektrometer im wesentlichen dem Stand der Technik, wie er z.B. durch die einleitend abgehandelten Dokumente gegeben ist.

In Fig. 1 ist der Tragkörper 1 als Hohlkörper ausgebildet und mit sehr präzisen Aussendimensionen hergestellt. Für ein optimales Temperaturverhalten hat der Tragkörper die Form eines zylindrischen Hohlkörpers und ist vorteilhaft im Spritzgussverfahren aus Kunststoff hergestellt. Am Tragkörper 1 sind mechanische Positionier- und Montagehilfen für die zusätzlichen Komponenten (analog Dokument EP-A 0 194 613) angebracht. Das konkave Reflexionsbeugungsgitter 4 ist vorzugsweise auch im Spritzgussverfahren aus Kunststoff oder mittels anderer Replikationsverfahren hergestellt. Die optische aktive Fläche des konkaven Beugungsgitters ist mit einer im spektralen Messbereich hochreflektiemden Schicht (z. B. für sichtbares Licht Aluminium mit Quartz ($SiO_2$) als Schutzschicht) verspiegelt. An der Gitterkunststoffkomponente sind mechanische Positionierhilfen ausgebildet, die eine präzise Montage am Tragkörper 1 und eine genaue Orientierung der Gitterlinien ermöglichen. Die Montage des Gitters am Tragkörper 1 erfolgt über eine Aufnahmeplatte 5.

Der Lichteinlass 2 wird durch einen Schiebetubus 6 mit optischer Faser 7 und mechanischem Eintrittsspalt 8 gebildet. Alternativ kann auch die optische Faser selbst den Eintrittsspalt bilden. Der Schiebetubus 6 kann in eine Führungsbohrung im Tragkörper gesteckt, mittels einer mechanischen Führungsrinne orientiert und gegenüber einer Referenzposition am Tragkörper positioniert sein.

Ausgehend von Figur 1 sollen im Folgenden die Erfindung und insbesondere deren Unterschiede zum Stand der Technik näher erläutert werden. Das erfindungsgemässe Konzept für die Halterung und Montage der Diodenzeile sowie die Kompensation des Temperaturdrifts ist aber nicht nur für Geometrien gemäss Fig. 1 geeignet, sondern kann auch direkt auf andere Spektrometer-Geometrien (z. B. Czerny-Turner, Ebert-Fastie, Littrow Anordungen) basierend auch auf ebenen Gittern angewendet werden.

Messlicht vom Eintrittsspalt 2 wird vom Reflektionsbeugungsgitter 4 in eine Austrittsfläche abgebildet und dort in seine spektralen Komponenten zerlegt. Das Zentrum des Lichteinlasses und die Normale 9 durch den Gittermittelpunkt definieren eine Ebene, die sogenannte Dispersionsebene, in der die spektrale Aufspaltung des Messlichts stattfindet. Die Gitterlinien des Reflexionsbeugungsgitters 4 sind dann im Gittermittelpunkt senkrecht zur Dispersionsebene (hier senkrecht zur Zeichenebene) orientiert.

Die Diodenzeile 3 muss exakt in der Austrittsfläche gegenüber dem Spektrum des Messlichts positioniert sein. Typische Anforderungen für die Positioniergenauigkeit der Diodenzeile sind +/- 0.1 mm innerhalb der Austrittsebene und weniger als +/-0.050 mm in der Tiefenschärfe senkrecht zur Austrittsebene. Diese Genauigkeit kann mit handelsüblichen Diodenzeilen in Standard-Gehäusen nicht erreicht werden.

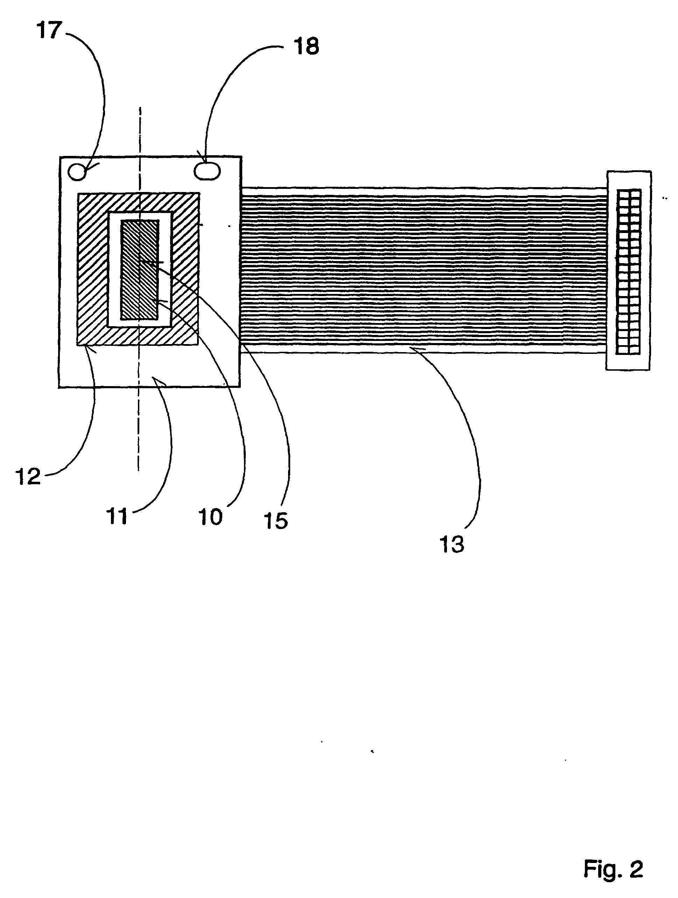

Die Erfindung schafft eine neuartige Montagemöglichkeit für Diodenzeilen 3 oder andere Detcktortypen am Tragkörper 1 des Spektrometers. Die Geometrie der erfindungsgemässen Anordnung ist in Figur 2 dargestellt. Gemäss einem ersten Aspekt der Erfindung ist ein Detektorchip 10 (Diodenzeilenfeld) aus Halbleitermaterial, direkt, d.h. ohne das übliche Gehäuse, auf eine planare Grundplatte 11 geklebt. Vorzugsweise besteht die Grundplatte 11 aus einer Leiterplatte ("Printed Circuit Board" (PCB)), die direkt die Bestückung einer zusätzlichen elektronischen Schaltung ermöglicht. Alternativ kann die Grundplatte aber auch aus anderen Materialien, z. B. Keramik, gefertigt sein.

Zusätzlich kann auf der Grundplatte 11 um den Detektorchip 10 herum noch ein Schutzrahmen 12 aufgesetzt sein. Dieser Rahmen 12 ist vorzugsweise höher ausgelegt als der Detektorchip 10 und bietet vor allem Schutz für die elektrischen Kontaktdrähte ("Bonddrähte") am Detektorchip bei der Manipulation und Montage des Detektorchips.

Die elektrischen Leitungen können von der Grundplatte 11 weg über ein flexibles Kabel 13 zu einer nicht dargestellten Hauptleiterplatte geführt sein.

Da die Dicke des Detektorchips 10 aus Halbleitermaterial (im allgemeinen Silizium für sichtbares Licht) durch den Herstellungsprozess von integrierten elektronischen Schaltungen sehr genau definiert ist (im allgemeinen besser als +/- 0.01 mm), kann die Oberfläche der Grundplatte gemäss einem Aspekt der Erfindung als mechanische Referenz für die vertikale Positionierung des Detektorchips 10 relativ zur Oberfläche der Grundplatte 11 dienen.

Im folgenden sind die Begriffe Diodenzeile und Detektorchip, wo keine Verwechslungsgefahr besteht, synonym verwendet.

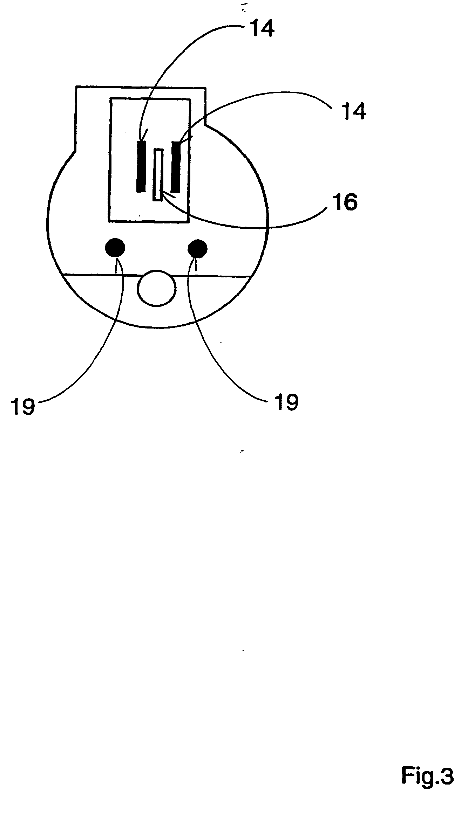

Für die vertikale Positionierung der Diodenzeile 3 senkrecht zur Grundplatte 11 sind am Tragkörper 1 des Spektralmoduls zwei rechteckige Rippen 14 ausgebildet, die unterhalb und oberhalb der Längsachse 15 der Diodenzeile zu liegen kommen und Abstandshalter für die Grundplatte 11 bilden. Die Struktur am Tragkörper ist in Figur 3 im Detail dargestellt. Zwischen den Rippen 14 ist eine rechteckige Öffnung 16 abgebildet, die als Blende für das Messlicht dient.

Lateral, in der Ebene der Grundplatte 11, ist der Detektorchip 10 beim Verkleben gegenüber Referenzpunkten auf der Grundplatte positioniert. Die Positionierung und Verklebung kann mit der geforderten Genauigkeit voll automatisiert und kostengünstig mittels Bestückungsautomaten aus der Halbleitaproduktionsindustrie ausgeführt werden. Referenzpunkte können auf verschiedenste Weise definiert werden, z. B. gegenüber den Aussenkanten der Grundplatte. Vorzugsweise ist aber die Referenz mittels mechanischer Positionierhilfen in der Grundplatte 11 realisiert, welche eine einfache Montage am Spektralmodul Tragkörper ermöglichen.

Bei Diodenzeilen-Spektrometern wird die räumliche Verteilung des Messspektrums an die lichtempfindliche Fläche der Diodenzeile angepasst und besteht deshalb aus einer rechteckigen Fläche mit einer Höhe in der Grössenordnung von 1 mm und einer Länge von mehreren Millimetern, die leicht kleiner gewählt wird als die Länge der Diodenzeile. Eine absolute Verschiebung des Messspektzums in Richtung der Längsachse der Diodenzeile ist deshalb nicht kritisch, da die Verschiebung bei der Wellenlängeneichung berücksichtigt werden kann. Besonders kritisch für die Montage ist hingegen eine Verkippung des Messspektrums gegenüber der Diodenzeile. In diesem Fall ist die Überlappung von Diodenzeile und Messspektrum nicht mehr über das gesamte Spektrum gewährleistet, was einen signifikanten Signalverlust verursacht.

Aus diesem Grund sind die mechanischen Positionierhilfen in Figur 2 vorzugsweise aus einem Rundloch 17 und einem Langloch 18 in der Grundplatte 11 gebildet. Das Zentrum des Rundlochs 17 kann als absolute Referenzposition dienen. Das Langloch 18 muss so angeordnet sein, dass eine Verkippung gegenüber der Längsachse der Diodenzeile verhindert wird. Um eine optimale thermische Stabilität im zusammengebauten Zustand mit dem Tragkörper 1 des Spektrometers zu erreichen, sollten die beiden Positionierlöcher 17 und 18 auf der gleichen Seite der Diodenzeile 3 und nahe an der Referenzachse (9) des Tragkörpers 1 angeordnet sein. Vorzugsweise wird die Verklebung der Grundplatte (11) und des Tragkörpers an den Positionierlöchern 17 und 18 durchgeführt. Die genaue Lage der Positionierlöcher 17 und 18 auf der Grundplatte 11 gegenüber dem Detektorchip 10 wird als freier Parameter für die Kompensation des Temperaturdrifts verwendet. Die Kompensationsmethode und die Berechnung der optimalen Lage der Positionierlöcher wird nachfolgend genau beschrieben.

Am Tragkörper sind entsprechende Positioniersturkturen angebracht. In der bevorzugten Auslegung mit dem Rund- und Langloch in der Grundplatte 11 sind es zwei mechanisch eng tolerierte zylindrische Stäbchen 19 (Fig.3), auf welche die Grundplatte 11 aufgesteckt werden kann.

Bei der Montage wird die Grundplatte 11 auf die Positionierstrukturen 19 am Tragkörper 1 aufgesetzt. Die Auflagefläche wird am Tragkörper 1 durch die Rippen 14 definiert. Die feste mechanische Verbindung der beiden Teile wird durch eine Verklebung an den Positionsstrukturen (Rund-, Langloch, Positionsstäbchen) realisiert. Zusätzlich zur festen Klebestelle kann die Grundplatte noch mit einer Feder auf die Auflagefläche des Tragkörpers angedrückt werden, um die Stabilität zu erhöhen.

Als letzter Schritt in der Montagekette können die Detektoreinheit (Grundplatte 11 mit darauf montierter Diodenzeile 3) und der Tragkörper 1 noch mit schwarzer Farbe zur Isolation von externem Streulicht lichtdicht abgedichtet werden.

Für die Kompensation des Temperaturdrifts müssen grundlegend zwei verschiedene Komponenten unterschieden werden: Erstens eine Änderung der Signalstärke und zweitens eine spektrale Verschiebung des Messsignals gegenüber der Diodenzeile. Die erste Driftkomponente, die Änderung der Signalstärke, ist für die meisten Anwendungen unkritisch. Sie kann über Messungen an einem Referenzkanal oder mit einer Referenzweissprobe komplett kompensiert werden.

Störend ist hingegen eine wellenlängenabhängige Verschiebung des Messsignals auf der Diodenzeile. Diese Verschiebung entspricht einer anderen Wellenlängeneichung des Spektrometers und kann nicht durch eine einfache Referenzmessung kompensiert werden.

Die Erfindung befasst sich deshalb vorwiegend mit der Kompensation des Temperaturdrifts für die Minimierung der spektralen Verschiebung in der Dispersionsebene. Die Spektrometereinheit muss dafür so aufgebaut sein, dass unabhängig von der Temperatur Licht von einer bestimmten Wellenlänge immer auf die gleiche Position der Diodenzeile trifft. Ist diese Voraussetzung geschaffen, wird in der Regel auch eine konstante Signalstärke erzielt.

Im Gegensatz zum Stand der Technik basiert die erfindungsgemässe Kompensationstechnik auf einer geometrische Optimierung und nicht auf einer Materialwahl mit möglichst gleichen thermischen Ausdehnungskoeffizienten. Als freier Optimierungsparameter dient die Position der mechanischen Befestigung von Tragkörper und Grundplatte mit darauf definiert positionierter Detektoreinrichtung. Dies ermöglicht grössere Freiheiten für die Materialwahl der Spektrometerkomponenten. Der ideale Befestigungspunkt liegt in der Dispersionsebene. Vorzugsweise werden aber zum Verkleben die Positionierstrukturen auf der Grundplatte und dem Tragkörper auf einer Geraden durch den idealen Befestigungspunkt und senkrecht zur Dispersionsebene angeordnet.

Die erfindungsgemässe Kompensationstechnik wird in der Folge für die Diodenzeilenhalterung mit der Grundplatte genauer beschrieben. Das Konzept ist aber allgemein anwendbar und gilt auch für andere Detektortypen, wie zweidimensionale CMOS oder CCD Detektorarrays, und andere Detektorgehäusetypen.

Die Kompensation des Temperaturdrifts basiert auf einer einfachen mathematischen Modellierung des spektralen Temperaturdrifts des Spektrometers in der Dispersionsebene. Die Berechnung beruht auf der mathematischen Durchrechnung des Strahlengangs eines einzelnen Hauptstrahls vom Zentrum des Eintrittspalts über das Zentrum des Beugungsgitters in die Austrittsebene, wo die Diodenzeile liegt. Auf der Diodenzeile wird die Position des Hauptstrahls vor und nach einer Erwärmung berechnet. Die Positionsdifferenz kann über die Wellenlängeneichung in eine spektrale Verschiebung umgerechnet werden.

Die Berechnung des Strahlengangs beruht auf den bekannten Formeln der geometrischen Optik und der Beugungsoptik und ist deshalb auf allgemeine Spektrometer-geometrien anwendbar. Die Simulation berücksichtigt die thermische Ausdehnung der Komponenten des Spektrometers für den Fall einer isotropen Erwärmung, d. h. die Distanzen skalieren proportional zur Temperaturdifferenz mit dem thermischen Ausdehnungskoeffizienten des entspechenden Materials. Als Referenzpunkt für die Berechnung der thermischen Ausdehnung wird das Gitterzentrum gewählt. In der Simulation werden Effekte höherer Ordnung vernachlässigt, wie Temperaturgradienten und durch thermische Verformung der Optikkomponenten entstehende Abbildungsfehler.

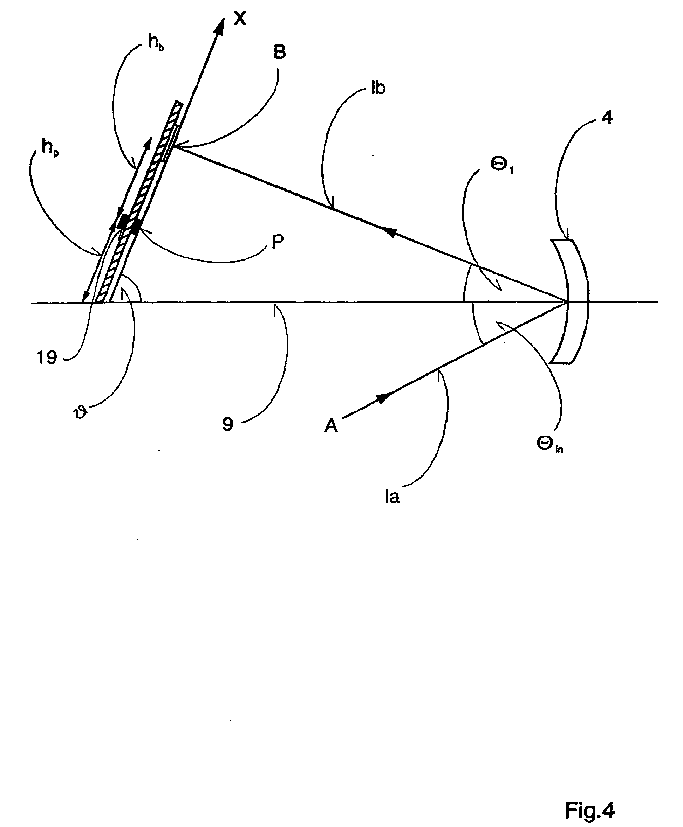

Die Geometrie für die Berechnung ist in der Figur 4 dargestellt.

Die Position des Eintrittsspalts am Tragkörper ist mit dem Buchstaben A gekennzeichnet. Die Distanz zum Zentrum des Gitters M ist mit la bezeichnet. Der Lichtstrahl wird am Beugungsgitter reflektiert und gemäss der Gittergleichung in die erste Beugungsordnung abgelenkt:

$$\sin\theta_1 = -\sin\theta_{in} + \frac{\lambda}{\Lambda},$$

wobei $\theta_1$ den Winkel der ersten Beugungsordnung bezeichnet, $\theta_{in}$ ist der Einfallswinkel des Lichtstrahls auf das Gitter, $\lambda$ ist die Wellenlänge des Lichtstrahls im Medium, $\Lambda$ bezeichnet die Gitterperiode und mit 9 ist die Gitternormale bezeichnet.

Die Distanz vom Beugungsgitter zum Messpunkt B in der Austrittsebene (auf der Diodenzeile) ist mit 1b bezeichnet. Der Schnittpunkt der Austrittsebene mit der Dispersionsebene ist als x-Achse bezeichnet. Der Nullpunkt der x-Achse ist auf der Gitternormalen 9, und die positive Achse ist in Richtung zum Messpunkt B gewählt. Bezüglich der x-Achse ist die Grundplatte 11 im Punkt P am Tragkörper befestigt. Die Distanz von der Gitternormalen 9 zum Punkt P ist mit hp bezeichnet. Die Distanz auf der Grundplatte 11 zum Punkt B auf der Diodenzeile 3 bzw. dem Detektorchip 10 ist mit hb bezeichnet.

Die thermische Ausdehnung erfolgt gemäss der folgenden Gleichung:

$$d_{\Delta T} = d_0(1 + \alpha\Delta T) \quad,$$

wobei $d_0$ und $d_{\Delta T}$ die Distanzen vor und nach der Erwärmung um $\Delta T$ darstellen und $\alpha$ der thermische Ausdehnungkoeffizient des entsprechenden Materials ist. Die Distanzen 1a, 1b, hp liegen auf dem Tragkörper 1 und dehnen sich mit dem thermischen Ausdehnungskoeffizienten $\alpha_t$ des Materials des Tragkörpers aus.

Die Gitterkonstante A dehnt sich mit dem thermischen Ausdehnungskoeffizienten $\alpha_g$ des Gittermaterials aus und beeinflusst über die Gittergleichung den Winkel $\theta_1$ der ersten Beugungsordnung. Die Distanz hb liegt auf der Grundplatte und dehnt sich mit dem thermischen Ausdehnungskoeffizienten $\alpha_d$ der Grundplatte aus. Die thermische Ausdehnung des Detektorchips 10 aus Halbleitermaterial auf der Grundplatte 11 wird wegen der kleinen Abmessungen und dem geringen thermischen Ausdehnungskoeffizienten des Halbleitermaterials (z. B. Silizium $\alpha = 2.5 \times 10\text{-}6\ 1/°K$) vernachlässigt.

Für die Analyse werden zwei Driftkomponenten berechnet: Erstens die Verschiebung des Messpunktes B auf der x-Achse $\Delta x1$ hervorgerufen durch die thermische Ausdehung des Tragkörpers 1 und der Gitterperiode A und zweitens die absolute Verschiebung der Diodenzeile 3 gegenüber der x-Achse $\Delta x2$. Eine perfekte Temperaturdriftkompensation wird erreicht, wenn über den gesamten Wellenlängenbereich des Messspektrums die beiden Komponenten identisch sind:

$$\Delta x_1 = \Delta x_2 \quad.$$

Die Verschiebung $\Delta x1$ wird mittels der obengenannten Formeln berechnet. Die Verschiebung der Diodenzeile $\Delta x2$ wird durch die thermische Ausdehnung von Tragkörper 1 und Grundplatte 11 bestimmt (Änderung von hp und hb) und kann mit der folgenden Gleichung ausgedrückt werden:

$$\Delta x_2 = h_p \alpha_t \Delta T + h_b \alpha_d \Delta T$$

Da die beiden Komponenten Grundplatte und Tragkörper aus unterschiedlichen Materialen aufgebaut sind, kann durch eine geschickte Wahl der Position des Verklebepunkts P (relative Entfernung des Detektorchips 10 in x-Richtung vom Verklebungspunkt P auf der Grundplatte 11) der Temperaturdrift $\Delta x2$ an $\Delta x1$ angepasst werden. Die spektrale Verschiebung $\Delta x2$ der Diodenzeile ist unabhängig von der Wellenlänge des Messlichts. Deshalb kann mit der Positionsoptimierung nur ein konstanter spektraler Drift über den gesamten Wellenlängenbereich des Messspektrums kompensiert werden. Die Befestigung über die Positionierstrukturen 17,18,19 in Grundplatte 11 und Tragkörper 1 kann auf einer Geraden durch den idealen Punkt P senkrecht zur Dispersionsebene erfolgen.

Die Prozedur für eine optimale Temperaturdriftkompensation gemäss dem beschriebenen Modell kann in zwei Schritten durchgeführt werden:

Materialwahl von Tragkörper 1 und Gitter 4 für eine bestimmte Spektrometergeometrie, um eine möglichst konstante spektrale Verschiebung $\Delta x1$ über dem gesamten Wellenlängenbereich des Messspektrums zu erhalten.

Restkompensation der spektralen Verschiebung für eine mittlere Wellenlänge des Messspektrums durch optimale Plazierung des Befestigungpunktes P von Tragkörper 1 und Grundplatte 11 der Detektoreinheit 3. Der resultierende Befestigungspunkt P muss natürlich geometrische Randbedingungen erfüllen, d.h. er muss am Tragkörper 1 realisierbar sein. Sonst muss die Materialwahl entsprechend geändert werden.

Die Kompensationsmethode wird an dem folgenden Beispiel demonstriert.

Spektrometer-Parameter gemäss Figur 4:

Messspektrum: 380 nm - 730 nm
Gitterperiode: 2.1 $\mu$m
la = 22.3 mm
lb (380 nm) = 27.61 mm
Einfallswinkel $\theta$in : -7.034°
Winkel erster Beugungsordnung $\theta_1$ (380 nm): 17.521°
Kippung der x-Achse gegenüber Gitternormale $\gamma$: -2.946°

Bevorzugte Materialien für die Herstellung mit thermischen Ausdehnungskoeffizienten:

Gitter: Kunststoff, $\alpha_g = 53 \times 10\text{-}6\ 1/°K$
Tragkörper: Kunststoff, $\alpha_t$ = wählbar für optimalen Temperaturdrift.
Grundplatte Diodenzeile: PCB Material, $\alpha_d = 16 \times 10\text{-}6\ 1/°K$

Die Simulation der thermischen Ausdehnung ergibt einen optimalen thermischen Ausdehnungskoeffizienten für den Tragkörper von $\alpha_t = 58 \times 10\text{-}6\ 1/°K$ für eine möglichst konstante spektrale Verschiebung über den gesamten spektralen Bereich.

Die Kompensation des Resttemperaturdriftwerts für eine mittlere Wellenlänge von $\lambda = 550$ nm ergibt dann eine optimale Position für den Befestigungspunkt von 0.5 mm oberhalb der Gitternormalen.

Der resultierende spektrale Temperaturdrift liegt unter 0.05 nm bei einer Erwärmung von 10°C.

**Patentansprüche**

**1.** Spektrometer mit einem Tragkörper (1), einem an diesem angeordneten Lichteinlass (2) für Messlicht, einem am Tragkörper (1) angeordneten Beugungsgitter (4) zur Aufspaltung des Messlichts, einer am Tragkörper (1) angeordneten optoelektrischen Detektoreinrichtung (3) und wenigstens einer optischen Komponente zur Abbildung des Lichteinlasses (2) über das Beugungsgitter (4) auf die Detektoreinrichtung (3), wobei die Detektoreinrichtung (3) auf einer im wesentlichen ebenen Grundplatte (11) befestigt ist, die Detektoreinrichtung (3) auf der Grundplatte (11) fest vorpositioniert befestigt ist, und der Tragkörper (1) und die Grundplatte (11) gegenseitig zusammenwirkende mechanische Positionierungsmittel (14,17,18,19) zur definierten Positionierung der Grundplatte (11) am Tragkörper (1) aufweisen, **dadurch gekennzeichnet, dass** die Grundplatte (11) in einem Befestigungspunkt (P) so am Tragkörper (1) befestigt ist, dass sie sich thermisch ausdehnen kann, und dass die Lage des Befestigungspunkts (P) relativ zur Lage der Detektoreinrichtung (3) auf der Grundplatte (11) so gewählt ist, dass die thermische Ausdehnung der Grundplatte (11) die durch die thermische Ausdehnung des Beugungsgitters (4) und des Tragkörpers (1) bedingte örtliche Verschiebung (Drift) der spektralen Lichtkomponenten relativ zur Detektoreinrichtung (3) wenigstens für eine mittlere Wellenlänge des Messspektrums kompensiert.

2. Spektrometer nach Anspruch 1, **dadurch gekennzeichnet, dass** die auf der Grundplatte (11) befestigte Detektoreinrichtung (3) gehäuselos, insbesondere als gehäuseloser Diodenzeilen-Chip (10) ausgebildet ist.

3. Spektrometer nach Anspruch 2, **dadurch gekennzeichnet, dass** die gehäuselose Detektoreinrichtung (3) bzw. der Diodenzeilen-Chip (10) direkt auf die Grundplatte (11) montiert, insbesondere aufgeklebt ist.

4. Spektrometer nach einem der vorangehenden Ansprüche, **dadurch gekennzeichnet, dass** die Grundplatte (11) als elektrische Leiterplatte ausgebildet ist.

5. Spektrometer nach einem der vorangehenden Ansprüche, **dadurch gekennzeichnet, dass** die Grundplatte (11) in einem oder mehreren Befestigungspunkten auf einer Geraden senkrecht zur Dispersionsebene so am Tragkörper (1) befestigt ist, dass sie sich thermisch ausdehnen kann, und dass die Lage des Befestigungspunkts (P) relativ zur Lage der Detektoreinrichtung (3) auf der Grundplatte (11) so gewählt ist, dass die thermische Ausdehnung der Grundplatte (11) die durch die thermische Ausdehnung des Beugungsgitters (4) und des Tragkörpers (1) bedingte örtliche Verschiebung (Drift) der spektralen Lichtkomponenten relativ zur Detektoreinrichtung (3) wenigstens für eine mittlere Wellenlänge des Messspektrums kompensiert.

6. Spektrometer nach einem der vorangehenden Ansprüche, **dadurch gekennzeichnet, dass** die Materialien für den Tragkörper (1), die Grundplatte (11) und das Beugungsgitter (4) bezüglich ihrer linearen thermischen Ausdehnungskoeffizienten so gewählt und aufeinander abgestimmt sind, dass die durch die thermische Ausdehnung des Beugungsgitters (4) und des Tragkörpers (1) bedingte örtliche Verschiebung (Drift) der spektralen Lichtkomponenten relativ zur Detektoreinrichtung (3) für das gesamte Messspektrum kompensiert wird.

7. Spektrometer nach einem der vorangehenden Ansprüche, **dadurch gekennzeichnet, dass** das Beugungsgitter (4) und die wenigstens eine optische Komponente gemeinsam durch ein konkaves Reflexionsbeugungsgitter (4) gebildet sind.

8. Spektrometer nach einem der vorangehenden Ansprüche, **dadurch gekennzeichnet, dass** das Beugungsgitter (4) aus Kunststoff gebildet ist.

9. Spektrometer nach einem der vorangehenden Ansprüche, **dadurch gekennzeichnet, dass** der Tragkörper (1) aus Kunststoff gebildet ist.

10. Spektrometer nach einem der vorangehenden Ansprüche, **dadurch gekennzeichnet, dass** der Tragkörper (1) eine im wesentlichen zylindrische Gestalt aufweist, und dass das Beugungsgitter (4) und die Grundplatte (11) an zwei gegenüberliegenden Stirnseiten des Tragkörpers (1) angeordnet sind.

**Claims**

1. A spectrometer comprising a carrier (1), a light inlet (2) disposed thereon for measurement light, a diffraction grating (4) disposed on the carrier (1) for splitting the measurement light, an optoelectric detector device (3) disposed on the carrier (1), and at least one optical component for imaging the light inlet (2) via the diffraction grating (4) onto the detector device (3), wherein the detector device (3) is fixed to a substantially plane base board (11), the detector device (3) is securely fixed in a predetermined position on the base board (11), and the carrier (1) and the base board (11) comprise interacting mechanical positioning means (14, 17, 18, 19) for the defined positioning of the base board (11) on the carrier (1), **characterised in that** the base board (11) is fixed at an attachment point (P) to the carrier (1) so that it can thermally expand, and **in that** the position of the attachment point (P) in relation to the position of the detector device (3) on the base board (11) is chosen so that the thermal expansion of the base board (11) compensates for the local drift of the spectral light components, which is caused by the thermal expansion of the diffraction grating (4) and of the carrier (1), relative to the detector device (3) at least for a wavelength in the centre of the measured spectrum.

2. A spectrometer according to Claim 1, **characterised in that** the detector device (3) fixed to the base board (11) is constructed without a housing, in particular as a diode array chip (1) without a housing.

3. A spectrometer according to Claim 2, **characterised in that** the housing-free detector device (3) or the diode array chip (10) is mounted, in particular stuck, directly onto the base board (11).

4. A spectrometer according to one of the preceding Claims, **characterised in that** the base board (11) is constructed as an electric printed circuit board.

5. A spectrometer according to one of the preceding Claims, **characterised in that** the base board (11) is fixed to the carrier (1) at one or more attachment points on a straight line perpendicular to the plane of dispersion so that it can thermally expand, and **in that** the position of the attachment point (P) relative to the position of the detector device (3) on the base board (11) is chosen so that the thermal expansion of the base board (11) compensates for the local drift of the spectral light components, caused by the thermal expansion of the diffraction grating (4) and of the carrier (1), relative to the detector device (1) at least for a wavelength in the centre of the measured spectrum.

6. A spectrometer according to one of the preceding Claims, **characterised in that** the materials for the carrier (1), the base board (11) and the diffraction grating (4) are chosen and matched to one another with respect to their linear coefficients of thermal expansion so that the local drift of the spectral light components, which is caused by the thermal expansion of the diffraction grating (4) and of the carrier (1), relative to the detector device (3) is compensated for the entire measured spectrum.

7. A spectrometer according to one of the preceding Claims, **characterised in that** the diffraction grating (4) and the at least one optical component are together formed by a concave reflection diffraction grating (4).

8. A spectrometer according to one of the preceding Claims, **characterised in that** the diffraction grating (4) is made from plastic.

9. A spectrometer according to one of the preceding Claims, **characterised in that** the carrier (1) is made from plastic.

10. A spectrometer according to one of the preceding Claims, **characterised in that** the carrier (1) has a substantially cylindrical shape, and **in that** the diffraction grating (4) and the base board (11) are disposed at two opposite end sides of the carrier (1).

**Revendications**

1. Spectromètre avec un corps support (1), une entrée de lumière (2) disposée sur ce dernier pour une lumière de mesure, un réseau de diffraction (4) disposé sur la corps support (1) pour scinder la lumière de mesure, un dispositif de détecteurs optoélectroniques (3) disposé sur le corps support (1) et au moins une composante optique pour la reproduction de l'entrée de lumière (2) par l'intermédiaire du réseau de diffraction (4) sur le dispositif de détecteurs (3), le dispositif de détecteurs (3) étant fixé sur une plaque de base (11) sensiblement plane, le dispositif de détecteurs (3) étant fixé de façon solidement pré-positionnée sur la plaque de base (11) et le corps support (1) et la plaque de base (11) comportant des moyens de positionnement mécaniques en interaction mutuelle (14, 17, 18, 19) pour le positionnement défini de la plaque de base (11) sur le corps support (1), **caractérisé en ce que** par un point de fixation (P), la plaque de base (11) est fixée sur le corps support (1) de façon à permettre sa dilatation thermique et **en ce que** la position du point de fixation (P) par rapport à la position du dispositif de détecteurs (3) sur la plaque de base (11) est choisie de façon à ce que la dilatation thermique de la plaque de base (11) compense la translation locale (dérivation) conditionnée par la dilatation thermique du réseau de diffraction (4) et du corps de base (1) des composantes spectrales de la lumière par rapport au dispositif de détecteurs (3) pour au moins une longueur d'onde moyenne du spectre de mesure.

2. Spectromètre selon la revendication 1, **caractérisé en ce que** le dispositif de détecteurs (3) fixé sur la plaque de base (11) est conçu sans boîtier, notamment sous la forme d'une puce à rangées de diodes (10).

**3.** Spectromètre selon la revendication 2, **caractérisé en ce que** le dispositif de détecteurs sans boîtier (3) ou la puce à rangées de diodes (10) est directement monté, notamment collé sur la plaque de base (11).

**4.** Spectromètre selon l'une quelconque des revendications précédentes, **caractérisé en ce que** la plaque de base (11) est conçue sous la forme d'une plaque électrique de circuits imprimés.

**5.** Spectromètre selon l'une quelconque des revendications précédentes, **caractérisé en ce que** par un ou par plusieurs points de fixation, la plaque de base (11) est fixée sur le corps support (1) sur une droite, à la perpendiculaire du plan de dispersion, de façon à permettre sa dilatation thermique et **en ce que** la position du point de fixation (P) par rapport à la position du dispositif de détecteurs (3) sur la plaque de base (11) est choisie de façon à ce que la dilatation thermique de la plaque de base (11) compense la translation locale (dérivation) conditionnée par la dilatation thermique du réseau de diffraction (4) et du corps de base (1) des composantes spectrales de la lumière par rapport au dispositif de détecteurs (3) pour au moins une longueur d'onde moyenne du spectre de mesure.

**6.** Spectromètre selon l'une quelconque des revendications précédente, **caractérisé en ce que** les matériaux pour le corps support (1), la plaque de base (11) et le réseau de diffraction (4) sont choisis au niveau de leur coefficients linéaires de dilatation thermique et adaptés entre eux de façon à compenser la translation locale (dérivation) conditionnée par la dilatation thermique du réseau de diffraction (4) et du corps de base (1) des composantes spectrales de la lumière par rapport au dispositif de détecteurs (3) pour l'ensemble du spectre de mesure.

**7.** Spectromètre selon l'une quelconque des revendications précédentes, **caractérisé en ce que** le réseau de diffraction (4) et au moins la composante optique sont formés en commun par un réseau de diffraction par réflexion concave (4).

**8.** Spectromètre selon l'une quelconque des revendications précédentes, **caractérisé en ce que** le réseau de diffraction (4) est conçu en matière synthétique.

**9.** Spectromètre selon l'une quelconque des revendications précédentes, **caractérisé en ce que** le corps support (1) est conçu en matière synthétique.

**10.** Spectromètre selon l'une quelconque des revendications précédentes, **caractérisé en ce que** le corps support (1) a une configuration sensiblement cylindrique et **en ce que** le réseau de diffraction (4) et la plaque de base (11) sont disposés sur deux faces frontales opposées du corps support (1).

Fig. 1

Fig. 2

Fig.3

12

Fig.4